# EUROPEAN PATENT SPECIFICATION

(11) **EP 1 717 289 B1**
(45) Date of publication and mention of the grant of the patent: **14.10.2009**
(21) Application number: 05009354.1
(22) Date of filing: 28.04.2005
(51) Int. Cl.: C09K 11/02

(54) **Method of coating a light-emitting material**
Beschichtungverfahren einer lichtemittierenden Vorrichtung
Procédé permettant d'enrober un matériau photo-émetteur d'un revêtement

(43) Date of publication of application: 02.11.2006
(73) Proprietor: Morizane, Shigeru, Tokyo 176-0003 (JP)
(72) Inventor: Morizane, Shigeru, Tokyo 176-0003 (JP)
(74) Representative: Glawe, Delfs, Moll

(56) References cited:
- EP-A- 0 455 401
- US-A- 5 087 523
- US-B1- 6 177 030
- US-B1- 6 591 634

## Description

### BACKGROUND OF THE INVENTION

### Field of the Invention

The present invention relates to a manufacturing method of a light-emitting material, capable of maintaining luminance of a light-emitting element such as an EL element, a fluorescent element or a light-accumulating element, thereby achieving long service life thereof.

### Description of Related Art

Electroluminescence (hereinafter represented as EL), discovered 1936 by G. Destriau, France, as a phenomenon of light emission when an AC high voltage was applied to a ZnS phosphor, has been an object of numerous developmental researches for application to a flat panel display and is now reaching a stage of commercial use. In the course of such development, a higher luminance, a higher definition, a lower electric power consumption, a longer service life and a lower cost are set as technical targets to be attained. Difficulties in attaining these targets arise from various causes such as deterioration in the light-emitting material, the electron transport material, the positive hole transport material, the structure of elements, an interface or an electrode. Among these, a deterioration of the light-emitting material is a basically important point, and a complete sealing is required. Therefore, elimination and exclusion of oxygen, water (moisture) and fine dust particles are essential (cf. non-patent literatures 1 - 3).

For solving these difficulties, various structures of the light-emitting material itself are being tested. For example, patent literature 1 describes an invention attaining a high light-emitting efficiency and a long service life by employing a benzothiophene derivative as an organic field light-emitting element, and, as an example of inventions for attaining a longer service life irrespective of the structure of the high-emitting material itself, patent literature 2 discloses a method of forming a diamond-like carbon (DLC) film so as to cover an entire light-emitting substrate, thereby improving reliability and extending the service life. However, since such DLC film is a thin film, a resinous film has to be further applied in order to protect the DLC film from being peeled for example by a scratch. Also a method of evaporating an inorganic film, for example by sputtering, on the surface of the light-emitting material is being used, but, in this method, the film is merely vapor deposited on the surface and cannot enter small pores, thus being unable to provide a sufficient sealing effect and insufficient to provide a long-life EL display device.

The present invention has been made in consideration of the aforementioned situation, and has been created to form, on the surface of the light-emitting material, a glass film which is thin but tough and is not peeled by a scratch or the like, and completely seals the surface even including fine pores, and completely excluding oxygen, water (moisture) and fine particles, thereby preventing deterioration of the light-emitting material and maintaining a high luminance, thus achieving a long service life.

Glass products, having characteristics such as hardness, rigidity, permeation resistance, stain resistance, moisture barrier, and a gas barrier, are utilized in familiar applications such as various containers, illumination devices, display devices, optical glass, bulb glass, color glass, art glass, solder glass, glass for passivation, crystal glass and the like. Also, utilizing the aforementioned properties, glass is used as a barrier film for moisture and gasses in a pinhole-free glass coating, for example on a metal surface.

However, all the known technologies for forming such glass coating film requires a heat treatment step at a temperature as high as 1500 - 2300°C. Also a recently developed sol-gel method of hydrolyzing an organic silicon compound requires a heating process of 1100°C or higher for glass formation to achieve final complete dehydration, and also a volume contraction at such process is not negligible. It has thus been considered impossible to form a glass film having moisture barrier property and gas barrier property in a low temperature of 200°C or less (hereinafter called "normal temperature range"). It has however become possible to form a glass film in the normal temperature range by utilizing a reaction catalyst, and an invention comprising a manufacturing method of a light-emitting material of a long service life has been made utilizing such technology to form a pinhole-free glass film on the surface of a light-emitting material, thus exploiting the aforementioned physical properties of the glass.
Patent Literature 1: JP-A No. 2001-354668;
Patent Literature 2: JP-A No. 2003-234179;
Non-patent Literature 1: Toshio Inokuchi, "Electroluminescent Display", Sangyo Tosho Co. (1991);
Non-patent Literature 2: Junji Kido, "Yuki EL no subete (all aspects of organic EL)", Nippon Jitsugyo Shuppan Co. (2003);
Non-patent Literature 3: Masayuki Kawamura, "Yokuwakaru yuki EL display (organic EL display made easy to understand)", Dempa Shimbun Co. (2003).

US 6,177,030 B1 discloses a method of coating a light emitting material with a coating consisting of metal oxide particles embedded in a silicon-containing layer forming a continuous phase. The coating method requires calcination at a high temperature (850 °C).

US 6,591,634 discloses a method for production of metal oxide glass films and micro-spherules for use as a coating material for prevention of oxidation in metals, cooking utensils, paper, films, etc. The method involves subjecting a hydrolysable organic metal component to hydrolysis in a mixed solution comprising water and organic solvent, containing halogen ions and boron ions. The metal oxide film and the method for producing it are not intended or adapted for use for coating a light-emitting element.

EP 0 455 401 A3 discloses a method for making encapsulated electroluminescent phosphor particles, which are encapsulated in a very thin oxide layer formed by a vapour phase hydrolysis reaction of oxide precursor materials on the particle surface. This coating is not a glass coating and does not have characteristics comparable to those of a glass coating.

### SUMMARY OF THE INVENTION

A problem to be solved by the present invention to attain a method of blocking out moisture and dust particles which prevent long-life luminance of the light-emitting material employed in the EL display is how to form a thin protective glass film, that is rigid and does not decrease the luminance of the EL display, on the surface of the light-emitting material. Therefore, an object of the present invention is to provide a manufacturing method of a light-emitting material of a long service life by a process conducted in a normal temperature range.

The aforementioned object can be attained, according to the present invention, by a manufacturing method of a light-emitting material which includes adding boron ions and halogen ions in this order to an alcohol solution of an organic silicon compound having a hydroxyl group and a methoxyl group to obtain a solution of a reaction product by hydrolysis/dehydration condensation at normal temperature, then dispersing fine particles of a light-emitting material in alcohol under agitation, adding the solution of the reaction product into such alcohol dropwise to form a glass film of the reaction product on the surface of the fine particles of the light-emitting material, then separating the fine particles and spray drying the fine particles at a temperature of 200°C or lower.

The invention also provides a manufacturing method of a light-emitting material which includes adding boron ions and halogen ions in this order to an alcohol solution of an organic silicon compound having a hydroxyl group and a methoxyl group to obtain a solution of a reaction product by hydrolysis/dehydration condensation at normal temperature, then misting and spraying the solution of the reaction product on fine particles of a light-emitting material dispersed and floating in a mixer to form a glass film of the reaction product on the surface of the fine particles of the light-emitting material, and spray drying the fine particles at a temperature of 200°C or lower.

In the invention, it is effective to add, in the case of hydrolysis/dehydration condensation of the organic silicon compound, alkyl titanate or titanium chloride as an accelerator. Also, a compound having an isocyanate group (-NCO) may be added so as to be 1- 10 wt. % of the organic silicon compound to promote gelation and to increase viscosity, thereby accelerating glass formation by hydrolysis/dehydration condensation. Incidentally, a light-accumulating material is included in the light-emitting material in the invention.

The invention further provides a manufacturing method of a light-emitting material which comprises dissolving, in alcohol, silicon tetrachloride in an amount which is 0.05 - 3.0 wt.% that of the fine particles of the light-emitting material, deflocculating and dispersing the fine particles of the light-emitting material in the solution, causing a hydroxyl group on the surface of the fine particles of the light-emitting material to react with silicon tetrachloride while mixing to form a glass film of silicon oxide on the surface of the fine particles, then separating the fine particles and spray drying the fine particles at a temperature of 200°C or lower. In this method, the thickness of the film can be controlled by changing the amount of silicon tetrachloride relative to the fine particles of the light-emitting material within the aforementioned range.

This manufacturing method for the light-emitting material forms a thin glass film of a thickness of 0.05 µm or less, which is strong, not peelable by a scratch or the like and not sacrificing luminance in an EL display, forming the film while maintaining a normal temperature range on the light-emitting material, so as to completely seal the surface of the light-emitting material, thereby completely blocking out oxygen, water (moisture) and fine particles, and provides the particular advantage of preventing the deterioration of the light-emitting material, thereby providing a light-emitting material of a long service life capable of maintaining a high luminance.

### BRIEF DESCRIPTION OF THE DRAWINGS

Fig. 1 is a view showing a comparison of change in luminance of light-emitting materials;
Fig. 2 is an electron photomicrograph of fine particles of a light-emitting material produced by a method of the present invention; and
Fig. 3 is a view showing a comparison of change in afterglow luminance of light-accumulating materials.

### DETAILED DESCRIPTION OF THE PREFERRED EMBODIMENTS

The method of the present invention for producing a light-emitting material includes following three steps:
(1) a step of preparing a solution of a reaction product for film formation;
(2) a step of forming a glass film on the surface of a light-emitting material; and
(3) a spray drying step.

Here, these steps will be explained in this order.
(1) Step of preparing a solution of a reaction product for film formation (hereinafter called "principal reactant solution")
   In the invention, a glass film to be formed on a surface of a light-emitting material is a thin film of a thickness of 0.05 µm or less, basically having a network of a silicon oxide chemically fixed to the surface of the light-emitting material as shown in the following chemical structure 1. 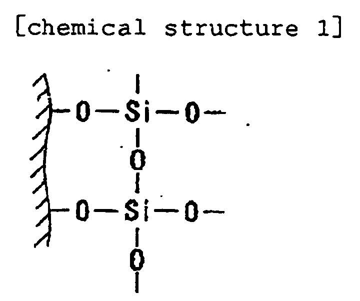 An organic silicon compound employed as a raw material is an alcohol-soluble silane compund having a hydroxyl group and a methoxyl group. A particularly preferred organic silicon compound has a hydroxyl group (-OH), a methoxyl group (-OCH₃) and a methyl group (-CH₃) group, such as a hydroxymethoxysilane or a methoxymethylsilane, which are respectively represented by general formulas:

   [Si(OH)ₙ(OCH₃)₄₋ₙ]

   and

   [Si(CH₃)ₙ(OCH₃)₄₋ₙ]

   wherein n indicates an integer from 1 to 3. Among such organic silicon compounds there are commercial products that are easily available and usable. Also, such organic silicon compound is commercially available as a low condensate obtained by a partial hydrolysis/dehydration condensation, which can also be employed as a raw material.
   In the method of the invention, the main reactant solution to be employed for forming the glass film is obtained by executing a hydrolysis/dehydration condensation of the organic silicon compound at the normal temperature, in an alcohol solution and in the presence of boron ions and halogen ions. At first a compound providing a boron ion B³⁺ and a compound providing a halogen ion X⁻ are added in this order to form a complex ion BX₄⁻ in the solution. The compound providing a boron ion B³⁺ can advantageously be boric acid H₃BO₃ or triethoxyborane B (OEt)₃. A concentration of B³⁺ ions in the reaction solution is preferably within a range of 1.0 to 3.0 wt.% with respect to the organic silicon compound. Also halogen ion X⁻ can be a fluorine ion F⁻, a chlorine ion Cl⁻ or a mixture thereof. The compound to be employed is preferably a salt capable of generating such an ion in the reaction liquid. The F⁻ ion source is preferably ammonium hydrogen fluoride (NH₄F·HF) or sodium fluoride (NaF) or the like, and the Cl⁻ ion source is preferably ammonium chloride (NH₄Cl) or the like. The concentration of halogen ions in the reaction solution, in the form of NH₄F·HF or NH₄Cl, is preferably within a range of 1. 0 to 3.0 wt.% with respect to the organic silicon compound.
   Apparently, the complex ion BX₄⁻ generated in the solution easily exchanges with a methoxyl group portion Si(OCH₃) of the organic silicon compound to become a complex ion SiX₅⁻ as indicated by a reaction formula (1) and to accelerate a hydrolysis/dehydration condensation reaction as indicated by formulas (2) and (3), thereby forming a glass film having a silicon oxide network as shown in the chemical structural 1, in the normal temperature range.

   Si-OCH₃ + BX₄⁻ + 1/2H₂O → SiX₅⁻ + 4CH₃OH + B³⁺ (1)

   SiX₅⁻ + 4H₂O → Si(OH)₄ + 5X⁻ (2)

   Si(OH)₄ → [chemical structure 1] + H₂O (3)

   In the method of the invention, for preparing the main reactant solution to be employed for forming the glass film, the aforementioned organic silicon compound may be directly employed in the reaction, but it is preferably diluted with a suitable solvent in order to facilitate control of the reaction. As the diluting solvent, an aliphatic lower alcohol, such as methanol, ethanol, propanol, or isopropanol, either singly or in a mixture can be advantageously chosen. The amount of the diluting solvent is variable depending on a particle size of the organic silicon compound, but it is preferable to dissolve the organic silicon compound within a range of 50 - 400 g in 1 liter of the solvent.
   In the preparation of the main reactant solution, an alkyl titanate or titanium tetrachloride is effective as an accelerator to be added for the hydrolysis/dehydration condensation reaction. The alkyl titanate can be, for example, tetrabutyl titanate. Its amount is advantageously 1 - 10 wt.% with respect to the organic silicon compound. It is also possible to add a compound having an isocyanate group (-NCO) for promoting gelation and causing a viscosity increase, thereby accelerating glass formation by the hydrolysis/dehydration condensation. Its amount is preferably 1 - 10 wt.% with respect to the organic silicon compound. The compound having the isocyanate group can be, for example, tolylene diisocyanate (TDI) or diphenylmethane diisocyanate. The promotion of gelation by an isocyanate group is apparently due to the formation of an urethane bond (-NHCOO-) by reaction of a hydroxyl group (OH) of the organic silicon compound.
(2) Step of forming a film on a surface of a light-emitting material
   In the method of the invention, the main reactant solution obtained as explained above is coated on the surface of the light-emitting material, to form a thin glass film, which is spray dried at a normal temperature range to obtain a light-emitting material. Formation of the glass film by coating the surface of the light-emitting material with the reaction product can be achieved by two methods. In one method, a fine powder of the light-emitting material is dispersed under agitation in alcohol while stirring, and the main reactant solution mentioned above is dropwise added or sprayed into the alcohol. In this method, the fine powder of the light-emitting material dispersed in alcohol preferably has a concentration within a range of 50 to 800 g per 1 liter of the alcohol. Also the main reactant solution is added to the fine particles of the light-emitting material silicon compound in the main reactant solution within a range of 0.05 to 3.0 wt.% with respect to the fine particles, for example so that there is 0.05 to 3.0 g of the organic silicon compound to 100 g of the light-emitting material. Outside such range, it becomes difficult to regulate the thickness of the glass film to be 0.05 µm or less. After the dropwise addition of the main reactant solution is terminated, the mixing is continued for a while and the entire system is transferred to a decantation container, and the layer containing the particles of the light-emitting material is separated.
   Another method of forming the glass film by coating the surface of the light-emitting material with a film of the reaction product is executed without a dispersion medium. A fine powder of a light-emitting material is well agitated for example by a Henshel mixer to form a floating dispersion in the air, and the main reactant solution in an amount of 0.1 - 2.0 wt.% to the fine powder is sprayed to the fine powder. A sufficient agitation is executed after the spraying, then the mixer is stopped and the fine powder is taken out from the mixer.
   In such glass film forming step, the organic silicon compound present in the main reactant solution apparently reacts with the hydroxyl group present on the surface of the fine particles of the light-emitting material to generate methanol, whereby the silicon oxide network of the chemical structure 1 is chemically fixed to the surface of the fine particles of the light-emitting material as indicated by following chemical structures 2 and 3, thereby forming a glass film. The aforementioned hydroxyl group on the surface is spontaneously generated generally on a surface of an inorganic light-emitting material, but may be absent depending on the substance constituting the light-emitting material, and, in such case, such hydroxyl group has to be artificially introduced for example by an ultraviolet irradiation. 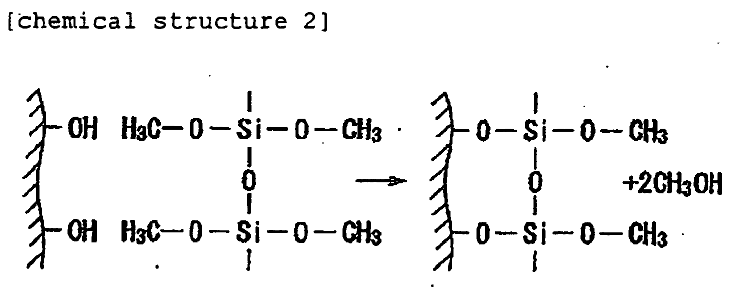 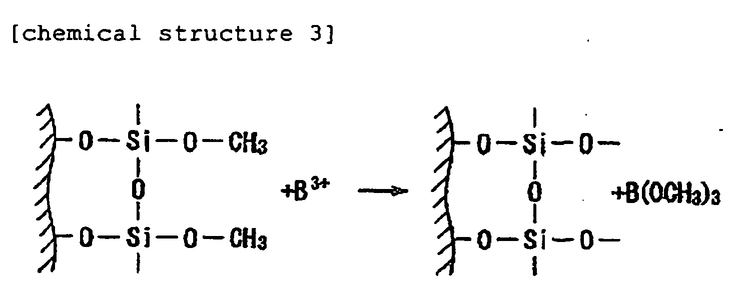 In the foregoing, there has been explained a producing method for the light-emitting material utilizing a main reactant solution as a film forming agent, but the producing method of the invention can also be executed utilizing silicon tetrachloride. In this case, silicon tetrachloride, in an amount of 0.05 - 3.0 wt.% with respect to the fine particles of the light-emitting material, is dissolved in alcohol with a concentration of 50 - 400 g of silicon tetrachloride in 1 liter of the solvent, then fine particles of the light-emitting material in a calculated amount are charged into the solution, and deflocculated and dispersed therein, and while mixing a reaction of a hydroxyl group on the surface of the fine particles of the light-emitting material with silicon tetrachloride is caused, thereby forming a glass film of silicon oxide on the surface of the light-emitting material, and then the layer containing the light-emitting material is separated by a decantation, as in the above-described solvent handling method.
(3) Spray drying step
   In case of the aforementioned method utilizing the dispersion medium, the obtained light-emitting material is in a state of mixture with an alcohol, and is therefore spray dried at a temperature of 200°C or lower for example by a spray dryer. In case of the method not utilizing the dispersion medium, the spray drying is not essential, but it is important to disperse crystalline particles of the light-emitting material so that they may not condense.

### (Example 1)

Formation of glass film having moisture and gas barrier property on fine particles of light-emitting material

A main reactant (containing a catalyst) was prepared in the following manner.
1. 20 g of an organic silicon compound (trade name: "Powder Processing Silicone", manufactured by Toshiba Silicones Co., with a chemical structure 4 and with physical properties shown in Table 1) were dissolved in 200 ml of ethyl alcohol;
2. 0.4 g of boric acid (H₃BO₃) were added to and mixed with thus obtained solution;
3. 0.4 g of ammonium hydrogen fluoride (NH₄F·HF) were added and mixed thereto;
4. 1 g of tetrabutyl titanate [(C₄H₉)₄TiO₄] was further added and mixed.

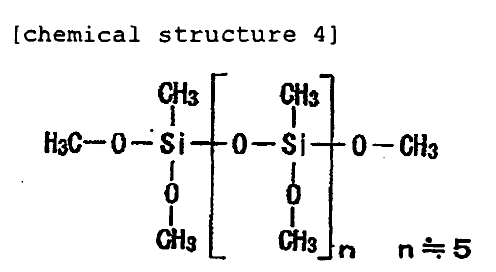

**Table 1**

| Appearance | colorless transparent liquid |
|---|---|
| Dynamic viscosity (25°C) | 3.7 cst |
| Specific gravity (25°C) | 1.06 |
| Refractive index (n_{D}) | 1.3829 |
| Flash point | 52°C |

A process utilizing a dispersion medium was conducted in the following procedure.

At first 200 g of fine particles of a light-emitting material (phosphor-based light-emitting material, manufactured by Ecran Ltd.) to be coated with a film were added to 1 liter of ethyl alcohol, then completely dispersed in a Henshel mixer, and 22 g of the aforementioned main reactant solution (organic silicon compound being about 1 wt.% of the light-emitting material) were dropwise added to the obtained dispersion and well agitated. Then the mixer was once stopped, and the dispersion liquid containing the particles was transferred to a decantation vessel and subjected to decantation by being kept still. As the fine particles of the light-emitting material on which a barrier film was formed floated upward, this particle layer was separated from a solution layer, and was spray dried with a spray dryer to obtain a light-emitting material of the invention.

The barrier property of the film was tested in a water repellency test. 200 ml of water are charged in a 300-ml beaker, and powder is poured therein, whereupon all untreated fine particles precipitate. Fine particles of a high level of glass film formation, that is, with the main reactant constituting 1.0 - 3.0 wt.% of the particle, floated upward without causing turbidity in the aqueous layer, while those with the main reactant constituting 0.05 - 1.0 wt.% showed a difference in that there was turbidity of the aqueous layer when the particles floated upward.

A process not utilizing a dispersion medium was conducted in the following procedure.

200 g of fine particles of a light-emitting material (same as above) to be coated with a film were well agitated in the air by a Henshel mixer to obtain a floating fluid state, and 22 g of the aforementioned main reactant solution (proportion of organic silicon compound to the light-emitting material being same as in the method utilizing the dispersion medium) were sprayed to the fine powder. A sufficient agitation was executed after the spraying, then the mixer was stopped, and the powder was taken out from the mixer to obtain a light-emitting material of the invention.

In the fine particles of the light-emitting material, obtained by the method utilizing the dispersion medium in Example 1, an X-ray diffraction of the glass film on the particle surface showed only a single large peak (center at 504 nm) corresponding to an amorphous phase, and thus indicated that a glass film was formed. The glass film had a thickness of 0.03 µm in an EPMA measurement.

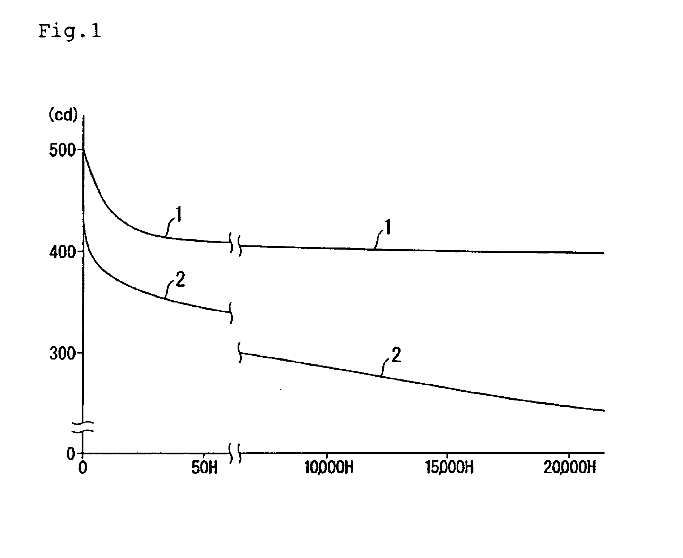

Fig. 1 shows a change in time of the luminance of the light-emitting material. A curve 1 indicates the change with time of the luminance of a light-emitting material prepared in Example 1, measured with a spectral teleluminance meter. Also a curve 2 indicates the change with time of the luminance of the same light-emitting material which has not been processed, measured in the same manner. Both showed a decrease in the luminance by about 20% after 50 hrs., but the unprocessed material showed a further decrease in the luminance down to about 40% after 20,000 hrs. On the other hand, the light-emitting material of Example 1 maintained almost the same luminance even after 20,000 hrs. as indicated by the curve 1.

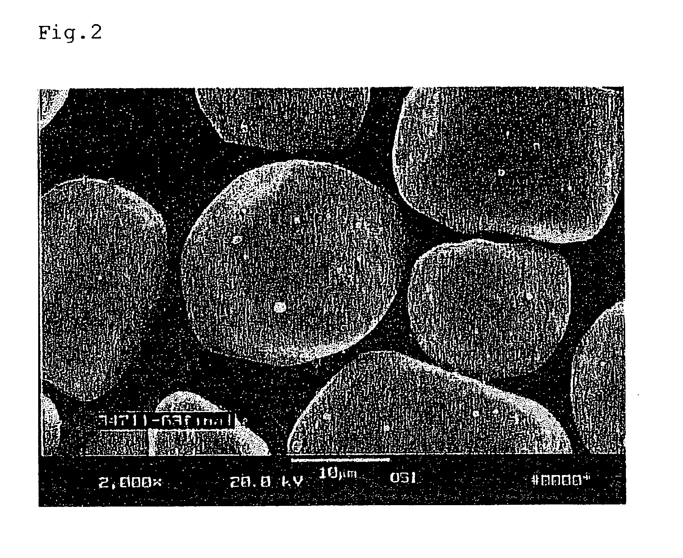

Fig. 2 is an electron photomicrograph of the fine particles of the light-emitting material prepared in Example 1.

### (Example 2)

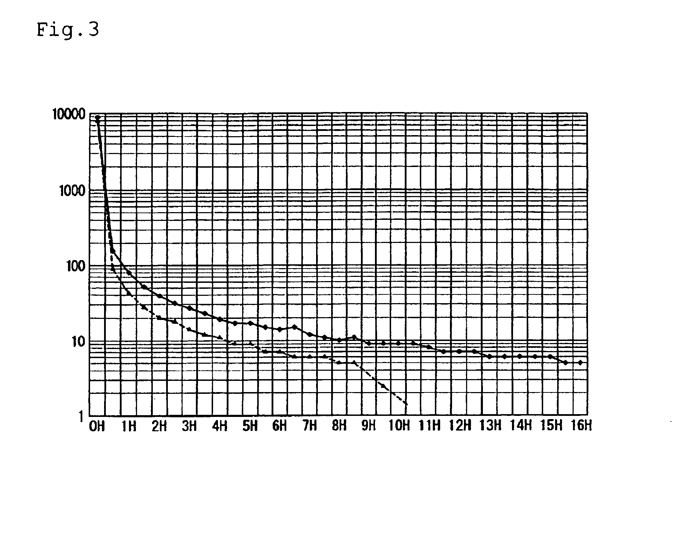

Fine particles of a phosphor-based phosphorescent material (green, 60 µm, manufactured by Ecran Ltd.) were processed in the identical manner as in Example 1 to obtain particles coated with a glass film of the invention on the surface, and such particles and particles of the same material which were not thus processed were compared with regard to change with time of the luminance of afterglow when irradiated with 4 black lamps of 20 W for 30 minutes. Results are shown in Fig. 3. The measurement was conducted with an equipment LS-100 manufactured by Minolta Co., at a measuring distance of 100 cm and at a vertical measuring angle. In Fig. 3, the light-accumulating material subjected to the glass film forming process (◆) had an afterglow luminance of 5 mcd (millicandela)/m² even after 16 hours, while the unprocessed same material (▲) showed a rapid decrease in the afterglow luminance after 8 hours.

As explained above, the manufacturing method of the invention for the light-emitting material can form a thin glass film on the surface of fine particles in a liquid phase or in a gaseous phase, and the organic silicon compound or silicon tetrachloride employed in the method can form a thin protective film 0. 05 - 3 wt.% that of the light-emitting material, which is strong, free from pinholes and does not decrease the luminance in an EL display, and can provide a moisture barrier and a gas barrier. Thus the present invention is applicable not only to a light-emitting material for a flat EL display but also in areas requiring a moisture barrier and a gas barrier such as pharmaceuticals, precision parts, semiconductor devices, high-voltage insulation devices and the like.

## Claims

1. A method of coating a light-emitting material comprising steps of:
adding boron ions and halogen ions in this order to an alcohol solution of an organic silicon compound having a hydroxyl group and a methoxyl group, and conducting hydrolysis/dehydration condensation to obtain a solution of the reaction product;
dispersing fine particles of a light-emitting material in alcohol while mixing;
adding dropwise the solution of the reaction product into the alcohol to form a glass film of the reaction product on a surface of the fine particles of the light-emitting material;
and then separating the fine particles and spray drying the fine particles at a temperature of 200°C or lower.

2. A method of coating a light-emitting material comprising steps of:
adding boron ions and halogen ions in this order to an alcohol solution of an organic silicon compound having a hydroxyl group and a methoxyl group and conducting hydrolysis/dehydration condensation to obtain a solution of a reaction product;
spraying the solution of the reaction product to fine particles of a light-emitting material dispersed and floating in a mixer to form a glass film of the reaction product on a surface of the fine particles of the light-emitting material; and
then spray drying the fine particles at a temperature of 200°C or lower.

3. A method of coating a light-emitting material according to claim 1 or 2, wherein alkyl titanate or titanium chloride serving as an accelerator for the hydrolysis/dehydration condensation is added.

4. A method of coating a light-emitting material according to claim 1 or 2, wherein a compound having an isocyanate group is added so as to be 1 - 10 wt.% of the organic silicon compound to promote gelation for increasing viscosity, thereby accelerating the hydrolysis/dehydration condensation.

5. A method of coating a light-emitting material comprising steps of:
dissolving, in alcohol, silicon tetrachloride so as to be 0.05 - 3.0 wt.% of the fine particles of a light-emitting material;
deflocculating and dispersing the fine particles of the light-emitting material in the solution;
causing a hydroxyl group on the surface of the fine particles of the light-emitting material to react with silicon tetrachloride while mixing to form a glass film of silicon oxide on the surface of the fine particles;
and then separating the fine particles and spray drying the fine particles at a temperature of 200°C or lower.

## Patentansprüche

1. Verfahren zur Beschichtung eines lichtemittierenden Materials mit den Schritten:
Zugeben von Borionen und Halogenionen in dieser Reihenfolge zu einer Alkohollösung einer organischen Siliziumverbindung, die eine Hydroxylgruppe und eine Methoxylgruppe aufweist, und Durchführen einer Hydrolyse/Dehydratisierungskondensation, um eine Lösung des Reaktionsprodukts zu erhalten;
Dispergieren von Feinteilchen eines lichtemittierenden Materials in Alkohol unter Mischen;
tropfenweises Zufügen der Lösung des Reaktionsprodukts in den Alkohol, um einen Glasfilm des Reaktionsprodukts auf einer Oberfläche der Feinteilchen des lichtemittierenden Materials zu bilden;
und dann Abtrennen der Feinteilchen und Sprühtrocknen der Feinteilchen bei einer Temperatur von 200°C oder weniger.

2. Verfahren zur Beschichtung eines lichtemittierenden Materials mit den Schritten:
Zugeben von Borionen und Halogenionen in dieser Reihenfolge zu einer Alkohollösung einer organischen Siliziumverbindung, die eine Hydroxylgruppe und eine Methoxylgruppe aufweist, und Durchführen einer Hydrolyse/Dehydratisierungskondensation, um eine Lösung eines Reaktionsprodukts zu erhalten;
Sprühen der Lösung des Reaktionsprodukts zu Feinteilchen eines lichtemittierenden Materials, das in einem Mischer dispergiert ist und schwebt, um einen Glasfilm des Reaktionsprodukts auf einer Oberfläche der Feinteilchen des lichtemittierenden Materials zu bilden; und
dann Sprühtrocknen der Feinteilchen bei einer Temperatur von 200°C oder weniger.

3. Verfahren zur Beschichtung eines lichtemittierenden Materials gemäß Anspruch 1 oder 2, wobei Alkyltitanat oder Titanchlorid, die als Beschleuniger für die Hydrolyse/Dehydratisierungskondensation dienen, zugegeben wird.

4. Verfahren zur Beschichtung eines lichtemittierenden Materials gemäß Anspruch 1 oder 2, wobei eine Verbindung, die eine Isocyanatgruppe aufweist, zugegeben wird, so dass sie 1 bis 10 Gewichtsprozent der organischen Siliziumverbindung ist, um eine Gelierung zum Erhöhen der Viskosität zu fördern, wodurch die Hydrolyse/Dehydratisierungskondensation beschleunigt wird.

5. Verfahren zur Beschichtung eines lichtemittierenden Materials mit den Schritten:
Lösen, in Alkohol, von Siliziumtetrachlorid, so dass es 0,05 bis 3,0 Gewichtsprozent der Feinteilchen eines lichtemittierenden Materials ist;
Entflocken und Dispergieren der Feinteilchen des lichtemittierenden Materials in der Lösung;
Bewirken der Umsetzung einer Hydroxylgruppe auf der Oberfläche der Feinteilchen des lichtemittierenden Materials mit Siliziumtetrachlorid unter Mischen, um einen Glasfilm aus Siliziumoxid auf der Oberfläche der Feinteilchen zu bilden;
und dann Abtrennen der Feinteilchen und Sprühtrocknen der Feinteilchen bei einer Temperatur von 200°C oder weniger.

## Revendications

1. Procédé permettant d'enrober un matériau photoémetteur, comprenant les étapes suivantes :
l'ajout d'ions de bore et d'ions d'halogène dans cet ordre à une solution alcoolique d'un composé de silicium organique contenant un groupe hydroxyle et un groupe méthoxyle et la mise en oeuvre d'une condensation par hydrolyse/déshydratation pour obtenir une solution du produit réactionnel ;
la dispersion de fines particules d'un matériau photoémetteur dans un alcool tout en mélangeant ;
l'ajout goutte à goutte de la solution du produit réactionnel dans l'alcool pour former un film de verre du produit réactionnel sur une surface des fines particules du matériau photoémetteur ;
puis la séparation des fines particules et le séchage par atomisation des fines particules à une température inférieure ou égale à 200°C.

2. Procédé permettant d'enrober un matériau photoémetteur, comprenant les étapes suivantes :
l'ajout d'ions de bore et d'ions d' halogène dans cet ordre à une solution alcoolique d'un composé de silicium organique contenant un groupe hydroxyle et un groupe méthoxyle et la mise en oeuvre d'une condensation par hydrolyse/déshydratation pour obtenir une solution de produit réactionnel ;
la pulvérisation de la solution du produit réactionnel sur de fines particules d'un matériau photoémetteur dispersées et la flottation dans un mélangeur pour former un film de verre du produit réactionnel sur une surface des fines particules du matériau photoémetteur ;
puis le séchage par atomisation des fines particules à une température inférieure ou égale à 200 °C.

3. Procédé permettant d'enrober un matériau photoémetteur selon la revendication 1 ou 2, dans lequel un titanate d'alkyle ou du chlorure de titane servant d'accélérateur pour la condensation par hydrolyse/déshydratation est ajouté.

4. Procédé permettant d'enrober un matériau photoémetteur selon la revendication 1 ou 2, dans lequel un composé contenant un groupe isocyanate est ajouté en une proportion de 1 à 10 % en poids du composé de silicium organique pour favoriser la gélification afin d'accroître la viscosité, pour ainsi accélérer la condensation par hydrolyse/déshydratation.

5. Procédé permettant d'enrober un matériau photoémetteur, comprenant les étapes suivantes :
la dissolution, dans un alcool, de tétrachlorure de silicium en une proportion de 0,05 à 3,0 % en poids des fines particules d'un matériau photoémetteur ;
la défloculation et la dispersion des fines particules du matériau photoémetteur dans la solution ;
le fait d'amener un groupe hydroxyle sur la surface des fines particules du matériau photoémetteur à réagir avec le tétrachlorure de silicium tout en mélangeant pour former un film de verre composé d'oxyde de silicium sur la surface des fines particules ;
puis la séparation des fines particules et le séchage par atomisation des fines particules à une température inférieure ou égale à 200°C.
